# EUROPÄISCHE PATENTSCHRIFT

(11) **EP 4 286 800 B1**
(45) Veröffentlichungstag und Bekanntmachung des Hinweises auf die Patenterteilung: **12.08.2026**
(21) Anmeldenummer: 22177174.4
(22) Anmeldetag: 03.06.2022
(51) Int. Cl.: G01F 15/00, G01F 15/12, F16J 15/06, G01F 15/14

(54) **DICHTUNGSELEMENT**
SEAL ELEMENT
ÉLÉMENT D'ÉTANCHÉITÉ

(43) Veröffentlichungstag der Anmeldung: 06.12.2023
(73) Patentinhaber: Landis+Gyr GmbH, 90459 Nürnberg (DE)
(72) Erfinder: Sturek, Robert, 69242 Mühlhausen (DE); Thull, Tobias, 90419 Nürnberg (DE); Jäkel, Andreas, 90443 Nürnberg (DE)
(74) Vertreter: Marks & Clerk LLP

(56) Entgegenhaltungen:
- EP-A2- 0 148 813
- WO-A1-2015/152329
- DE-A1- 102004 055 816
- KR-Y1- 200 451 243

## Beschreibung

Die vorliegende Erfindung bezieht sich auf ein Dichtungselement zur dichtenden Anordnung einer Messeinrichtung, insbesondere einer Ultraschallmesseinrichtung, an einem Einrohranschlussstück sowie auf eine Anordnung umfassend eine Messeinrichtung, insbesondere eine Ultraschallmesseinrichtung, ein Einrohranschlussstück und ein solches Dichtungselement.

Aus dem Stand der Technik sind dem Fachmann derartige Messeinrichtungen, insbesondere Ultraschallmesseinrichtungen, bevorzugt Füllstands- oder Durchflussmesseinrichtungen für strömende Medien, höchst bevorzugt Verbrauchsmengenmesser für Wasser oder gelieferte Wärme- oder Kälteenergie, bekannt, die auf der Ultraschallmesstechnik basieren. Bei einem solchen Gerät werden impulsförmige Ultraschallsignale mittels Ultraschallwandler erzeugt sowie in Flussrichtung und entgegen der Flussrichtung durch das Medium gesendet. Der Unterschied der Laufzeiten der Schallsignale in beiden Laufrichtungen wird zur Ermittlung der Durchflussmenge des Mediums ausgewertet. Diese Durchflussmesser arbeiten nach dem Laufzeitdifferenzprinzip.

Der Fachmann kennt hier verschiedene Ausgestaltungen. Zum einen sind Einrichtungen bekannt, die Durchflussmesser im eigentlichen Sinne darstellen und ausschließlich die Durchflussmenge des Mediums ermitteln. Zum anderen gibt es auch Energiezähler, beispielsweise in Form von Wärme- und Kältezählern, bei denen die nach dem vorstehend erläuterten Prinzip ermittelte Durchflussmenge mit einer zusätzlich über ein Temperaturfühlerpaar ermittelten Temperaturdifferenz im Vor- und Rücklauf in Verbindung gebracht wird, um so die über das Medium zugeführte (Wärme- oder Kälte-) Energie zu bestimmen. Auch derartige Energiezähler sind hier als - speziell ausgestaltete - Durchflussmesser zu verstehen.

Derartige Messeinrichtungen können dabei fluiddicht an einem standardisierten Einrohranschlussstück angeordnet sein. Beispielsweise kann die Messeinrichtung hierfür einen Befestigungsring aufweisen, mit dem eine Montage an einem Anschlusselement des Einrohranschlussstückes ermöglicht wird.

Der Übergang zwischen dem Einrohranschlussstück und der daran koppelbaren Messeinrichtung, insbesondere einer Ultraschallmesseinrichtung, muss dabei abgedichtet sein, damit ein Mediumsaustritt verhindert wird. Hierfür werden im Stand der Technik zwischen der Messeinrichtung und dem Einrohranschlussstück 2 bis 3 separate Dichtungselemente und ein eigenständiges Sieb verwendet. Das Sieb ist dabei notwendig, um eine korrekte Anströmung der Messeinrichtung sicherzustellen sowie grobe Verunreinigungen zurück zu halten, während die separaten Dichtungen dafür Sorge tragen, dass kein Medium austreten kann bzw. dass keine passive Strömung am Einlauf vorbei direkt in den Auslauf strömt.

Obwohl damit bereits eine Abdichtung zwischen der Messeinrichtung und dem Einrohranschlussstück bekannt ist, besteht weiterhin ein Bedarf an verbesserten Lösungen hinsichtlich Handhabung und Montage derartiger Abdichtungen.

KR 200 451 243 Y1 beschreibt eine Messeinheit umfassend ein Sieb, eine untere Kappe, eine obere Kappe und ein Laufrad, und der untere Teil des Siebs ist ein Auslass eines unteren Gehäuses, das so installiert ist, dass es mit einem offenen oberen Strömungsweg kommuniziert. EP 0 148 813 A2 beschreibt eine Dichtung, die beständig gegen hohe Temperaturen ist und zum Verbinden zweier Rohre dient, die jeweils aus zwei konzentrischen Kanälen mit ebenen, ringförmigen Endflächen bestehen, die senkrecht zur Achse der Kanäle verlaufen. Die Dichtung der EP 0 148 813 A2 umfasst eine elastische Dichtung mit ebenen und parallelen Auflageflächen, die zwei konzentrische ringförmige Zonen einnehmen, die durch radiale Bereiche, welche einen integralen Bestandteil der Dichtung bilden, miteinander verbunden sind, sowie einen Metallring, der die elastische Dichtung umgibt.

Die Aufgabe der Erfindung ist es demnach, ein Dichtungselement zur dichtenden Anordnung einer Messeinrichtung, insbesondere einer Ultraschallmesseinrichtung, an einem Einrohranschlussstück anzugeben, das die Nachteile der aus dem Stand der Technik bekannten Abdichtungen überwindet und gegenüber bekannten Abdichtungen weitergehend verbessert ist.

Diese Aufgabe wird durch ein Dichtungselement zur dichtenden Anordnung einer Messeinrichtung, insbesondere einer Ultraschallmesseinrichtung, an einem Einrohranschlussstück gemäß den Merkmalen des unabhängigen Patentanspruchs 1 gelöst. Ferner wird zur Lösung der Aufgabe eine Anordnung umfassend eine Messeinrichtung, insbesondere eine Ultraschallmesseinrichtung, ein Einrohranschlussstück und ein solches Dichtungselement in Patentanspruch 17 angegeben. Die Unteransprüche betreffen besonders vorteilhafte Weiterbildungen der Erfindung.

Gemäß einem wesentlichen Aspekt bezieht sich die Erfindung auf ein Dichtungselement zur dichtenden Anordnung einer Messeinrichtung, insbesondere einer Ultraschallmesseinrichtung, an einem Einrohranschlussstück. Besonders vorteilhaft handelt es sich bei der Messeinrichtung um eine solche zur schallbasierten Erfassung der Durchflussmenge eines flüssigen Mediums. Die dabei benötigten Schallwandler können in unterschiedlicher Ausgestaltung vorliegen. Bei einer bevorzugten Ausführungsform sind zwei Schallwandler vorhanden, die jeweils sowohl als Schallsender als auch als Schallempfänger ausgebildet sind, so dass beispielsweise impulsförmige Schallsignale in Durchflussrichtung und entgegen der Durchflussrichtung des Mediums in die Messstrecke eingespeist werden können, und die Ermittlung der Durchflussmenge des Mediums anhand des Laufzeitdifferenzprinzips erfolgen kann. Die beiden Schallwandler erzeugen also insbesondere zwei Schallsignale, die die Messstrecke im Wesentlichen in entgegengesetzter Richtung durchlaufen. Bei dem Einrohranschlussstück kann es sich um ein solches mit einer Anschlussschnittstelle, bzw. einem dafür angepassten Befestigungsring, des Typs IST, M60, PCC, Y01 nach DIN EN ISO 4064-4 oder dazu vergleichbare handeln.

Das erfindungsgemäße Dichtungselement weist dabei wenigstens einen ring- und/oder scheibenförmigen Grundkörper aus einem elastischen Dichtungsmaterial mit einer zentrischen Durchflussöffnung für ein flüssiges Medium auf, wobei der Grundkörper einen äußeren und inneren Dichtungsabschnitt sowie einen dazwischen aufgenommenen Strömungssiebabschnitt aufweist, die die Durchflussöffnung jeweils konzentrisch umgeben.

Ferner sind der äußere Dichtungsabschnitt und der innere Dichtungsabschnitt zur Abdichtung zwischen dem Einrohranschlussstück und der Messeinrichtung ausgebildet. Schließlich ist erfindungsgemäß auch noch vorgesehen, dass der Strömungssiebabschnitt eine Vielzahl an Durchlassöffnungen zur Durchführung des Mediums aufweist, die zur strömungsoptimierten Anströmung der Messeinrichtung mit dem Medium ausgebildet sind. Damit weist also das erfindungsgemäße Dichtungselement sämtliche sowohl für eine Abdichtung, als auch eine korrekte Anströmung der Messeinrichtung notwendigen Eigenschaften in nur einem einzigen Bauteil vereint auf. Mit dem äußeren und dem inneren Dichtungsabschnitt können damit die bisher im Stand der Technik vorgesehenen mehreren Dichtungselemente entfallen und durch nur eine einziges Dichtungselement ersetzt werden, das noch dazu auch das separate Sieb durch den erfindungsgemäß zwischen dem äußeren und dem inneren Dichtungsabschnitt vorgesehenen Strömungssiebabschnitt in sich vereint. In anderen Worten ersetzt also das erfindungsgemäße Dichtungselement die im Stand der Technik notwendigen 2 bis 3 separate Dichtungselemente und das eigenständige Sieb durch ein einziges Bauteil. Durch die Vereinigung der beiden Funktionen in einem einzigen Bauteil werden Kosten in der Herstellung gespart und darüber hinaus auch die Montage erleichtert. Letztlich reduzieren sich damit auch die möglichen Fehlerquellen bei der Montage, da nur mehr ein einziges Bauteil, nämlich das erfindungsgemäße Dichtungselement montiert werden muss.

Gemäß einer besonders vorteilhaften Ausführungsvariante kann dabei vorgesehen sein, dass der Grundkörper einteilig, insbesondere einstückig ausgebildet ist. Hierdurch kann das Dichtungselement beispielsweise als einfaches Spritzgussteil besonders kostengünstig hergestellt werden. Dies erleichtert jedoch auch die Handhabung und Bevorratung in der Distribution, da nur mehr ein einziges Dichtungselement notwendig und erforderlich ist und nicht mehr, wie im Stand der Technik, mehrere separate Dichtungen sowie noch dazu ein eigenständiges Sieb bevorratet werden muss.

Gemäß einer nochmals weiteren vorteilhaften Ausführungsvariante kann dabei vorgesehen sein, dass das elastische Dichtungsmaterial des Grundkörpers zumindest anteilig Kautschuk, insbesondere einen Synthesekautschuk, enthält. Kautschuk weist dabei ausreichende elastische Eigenschaften auf, um eine besonders sichere Abdichtung der Dichtungsabschnitte zu erzielen. Ferner weist Kautschuk jedoch gleichzeitig auch eine ausreichende mechanische Festigkeit auf, um sich bei einer Durchströmung der Durchlassöffnungen des Strömungssiebabschnittes mit dem flüssigen Medium nicht zu verformen.

Gemäß einer nochmals weiteren vorteilhaften Ausführungsvariante kann dabei vorgesehen sein, dass der Grundkörper vorzugsweise vollständig aus Ethylen-Propylen-Dien-Kautschuk (EPDM) oder aus Acrylnitril-Butadien-Kautschuk (NBR) oder aus Fluorelastomere oder aus Silikon hergestellt ist. All diese Werkstoffe ermöglichen ebenfalls eine besonders gute und kostengünstige Verarbeitung bei gleichzeitig ausreichender elastischer Eigenschaft als Dichtungsmaterial, das noch dazu eine ausreichende mechanische Festigkeit aufweist.

Gemäß einer nochmals weiteren vorteilhaften Ausführungsvariante kann dabei vorgesehen sein, dass der äußere und der innere Dichtungsabschnitt sowie der Strömungssiebabschnitt jeweils ringförmig ausbildet sind. Insgesamt stellt sich damit also ein im Wesentlichen koaxialer Aufbau aus allen drei Abschnitten, nämlich dem inneren Dichtungsabschnitt, dem äußeren Dichtungsabschnitt und dem, den inneren Dichtungsabschnitt mit dem äußeren Dichtungsabschnitt verbindenden Strömungssiebabschnitt, ein, wobei sich der koaxiale Aufbau an dem Mittelpunkt der Durchflussöffnung orientiert. Dies unterstützt eine möglichst homogene Anströmung der Messeinrichtung über den Strömungssiebabschnitt und verbessert damit weitergehend die strömungsoptimierte Anströmung der Messeinrichtung.

Gemäß einer nochmals weiteren vorteilhaften Ausführungsvariante kann dabei vorgesehen sein, dass die Durchlassöffnungen des Strömungssiebabschnittes einen kreisförmigen, quadratischen, rechteckförmigen, dreieckförmigen oder stegförmigen Querschnitt, vorzugsweise einen im Wesentlichen trapezförmigen Querschnitt mit abgerundeten Eckbereichen, aufweisen. Diese Querschnitte sind besonders geeignet, um eine strömungsoptimierte Anströmung der Messeinrichtung zu erreichen. Zudem sorgen abgerundete Eckbereiche dafür, dass es zu weniger Verwirbelungen des flüssigen Mediums bei Durchströmen der Durchlassöffnungen kommt und damit die Anströmung der Messeinrichtung noch weitergehend homogenisiert und damit strömungsoptimiert wird.

Gemäß einer nochmals weiteren vorteilhaften Ausführungsvariante kann dabei vorgesehen sein, dass der Strömungssiebabschnitt mehrere Strebenabschnitte aufweist, die sich vom inneren Dichtungsabschnitt radial und speichenförmig zum äußeren Dichtungsabschnitt erstrecken. Die Strebenabschnitte erhöhen dabei die mechanische Festigkeit bzw. mechanische Steifigkeit des Strömungssiebabschnittes. Besonders vorteilhaft weisen dabei zumindest zwei, besonders bevorzugt sämtliche Strebenabschnitte dieselbe Länge auf.

Dabei können sich die Strebenabschnitte des Strömungssiebabschnittes von einem Innendurchmesser zwischen 30mm und 35mm, bevorzugt zwischen 32mm und 34mm, höchst bevorzugt von 33mm, auf einen Außendurchmesser zwischen 42mm und 50mm, bevorzugt zwischen 44mm und 48mm, höchst bevorzugt von 46mm, bezogen auf eine Mittelachse des Dichtungselementes erstrecken. Beispielsweise weist ein Strebenabschnitt mit einem Innendurchmesser von 33mm und einem Außendurchmesser von 46mm eine Länge von 13mm auf.

Ferner kann sich der innere Dichtungsabschnitt von einem Innendurchmesser zwischen 20mm und 24mm, bevorzugt zwischen 21mm und 23mm, höchst bevorzugt von 22mm, auf einen Außendurchmesser zwischen 32mm und 34mm, höchst bevorzugt von 33mm, bezogen auf eine Mittelachse des Dichtungselementes erweitern. Beispielsweise weist also ein innerer Dichtungsabschnitt mit einem Innendurchmesser von 22mm und einem Außendurchmesser von 33mm eine Flächenbreite von 11mm auf.

Schließlich kann sich der äußere Dichtungsabschnitt von einem Innendurchmesser zwischen 42mm und 50mm, bevorzugt zwischen 44mm und 48mm, höchst bevorzugt von 46mm, auf einen Außendurchmesser zwischen 56mm und 58mm, höchst bevorzugt von 57mm, bezogen auf eine Mittelachse des Dichtungselementes erweitern. Beispielsweise weist also ein äußerer Dichtungsabschnitt mit einem Innendurchmesser von 46mm und einem Außendurchmesser von 57mm eine Flächenbreite von 11mm auf.

Besonders vorteilhaft weist das Dichtungselement für die Strebenabschnitte einen Innendurchmesser von 33mm und einen Außendurchmesser 46mm, sowie für den inneren Dichtungsabschnitt einen Innendurchmesser von 22mm und einen Außendurchmesser von 33mm und für den äußeren Dichtungsabschnitt einen Innendurchmesser von 46mm und einen Außendurchmesser von 57mm auf. Damit wird ein Dichtungselement geschaffen, das mit einer Anschlussschnittstelle eines Einrohranschlussstückes des Typs IST, M60, PCC, Y01 nach DIN EN ISO 4064-4 oder dazu vergleichbare kompatibel ausgebildet ist. Die einzelnen Durchmesser (also Innen- und Außendurchmesser der Strebenabschnitte, Innen- und Außendurchmesser des inneren Dichtungsabschnittes sowie Innen- und Außendurchmesser des äußeren Dichtungsabschnittes) sind vorstehend jeweils angegebenen als radialer Abstand zur zentrischen Mittelachse des Dichtungselementes - also jeweils gemessen vom durch die zentrische Mittelachse ausgebildeten Mittelpunkt des Dichtungselements nach radial außen.

Gemäß einer nochmals weiteren vorteilhaften Ausführungsvariante kann dabei vorgesehen sein, dass jeweils eine oder mehrere Durchlassöffnungen zwischen zwei benachbarten Strebenabschnitten des Strömungssiebabschnittes angeordnet ist. Hierdurch wird ein kompakter und mechanischer stabiler Aufbau des Strömungssiebabschnittes geschaffen.

Gemäß einer nochmals weiteren vorteilhaften Ausführungsvariante kann dabei vorgesehen sein, dass die Strebenabschnitte durch zumindest einen koaxial zur zentrischen Durchflussöffnung vorgesehenen sowie ringförmig ausgebildeten Versteifungsabschnitt derart miteinander verbunden sind, dass sich auf unterschiedlichen Radien zu einer Mittelachse des Dichtungselementes jeweils kreisringförmig mehrere Durchlassöffnungen einstellen. Besonders vorteilhaft ist der Versteifungsabschnitt einteilig, insbesondere einstückig, mit dem Grundkörper des Dichtungselementes ausgebildet. Damit wird die mechanische Festigkeit bzw. mechanische Steifigkeit des Strömungssiebabschnittes nochmals weitergehend erhöht, indem zusätzlich zu den Strebenabschnitte noch ringförmig ausgebildete Versteifungsabschnitte vorgesehen sind. Vorteilhaft erreicht damit das Dichtungselement trotz seiner elastischen Eigenschaften eine verbesserte mechanische Steifigkeit und neigt somit weniger zur Verformung, wenn es mit hohen Volumenströmen an flüssigem Medium angeströmt wird.

Gemäß einer nochmals weiteren vorteilhaften Ausführungsvariante kann dabei vorgesehen sein, dass die mehreren Durchlassöffnungen als Strömungsgleichrichterkanäle ausgebildet sind. Die Strömungsgleichrichterkanäle können insbesondere dazu ausgebildet sein, eine laminare oder im Wesentlichen laminare Anströmung der Messeinrichtung zu erzeugen. Damit wird sehr wirkungsvoll eine strömungsoptimierte Anströmung der Messeinrichtung erzeugt.

Gemäß einer nochmals weiteren vorteilhaften Ausführungsvariante kann dabei vorgesehen sein, dass die mehreren Durchlassöffnungen zumindest teilweise in gleichmäßigen oder näherungsweise gleichmäßigen Winkelabständen um die zentrische Durchflussöffnung herum angeordnet sind. In anderen Worten sind also einige der mehreren Durchlassöffnungen in gleichmäßigen oder näherungsweise gleichmäßigen Winkelabständen um die zentrische Durchlassöffnung herum angeordnet und die restlichen Durchlassöffnungen in nicht gleichmäßigen Winkelabständen um die zentrische Durchlassöffnung herum. Besonders vorteilhaft kann dabei vorgesehen sein, dass sämtliche Durchlassöffnungen in gleichmäßigen oder näherungsweise gleichmäßigen Winkelabständen um die zentrische Durchflussöffnung herum angeordnet sind. Die gleichmäßige Anordnung der Durchlassöffnungen um die zentrische Durchflussöffnung unterstützt weiter die Erzeugung eine strömungsoptimierte Anströmung der Messeinrichtung mit dem flüssigen Medium.

Gemäß einer nochmals weiteren vorteilhaften Ausführungsvariante kann dabei vorgesehen sein, dass jeweils auf einem gemeinsamen Radius zu der Mittelachse angeordnete Durchlassöffnungen des Strömungssiebabschnittes zumindest teilweise identisch zueinander ausgebildet sind. In anderen Worten sind also einige der mehreren Durchlassöffnungen, die jeweils auf einem gemeinsamen Radius zu der Mittelachse angeordnet sind, identisch zueinander ausgebildet. Besonders vorteilhaft kann dabei vorgesehen sein, dass sämtliche auf einem gemeinsamen Radius zu der Mittelachse angeordnete Durchlassöffnungen des Strömungssiebabschnittes identisch zueinander ausgebildet sind. Gemäß einer nochmals weiteren vorteilhaften Ausführungsvariante kann dabei vorgesehen sein, dass die jeweils mit einem gemeinsamen Radius zur Mittelachse angeordneten Durchlassöffnungen kreisringförmig um die Mittelachse vorgesehen sind. Gemäß einer nochmals weiteren vorteilhaften Ausführungsvariante kann dabei vorgesehen sein, dass zumindest zwei, vorzugsweise sämtliche auf einem gemeinsamen Kreisring vorgesehene Durchlassöffnungen eine identische Querschnittfläche aufweisen. Alternativ oder kumulativ kann hier auch vorgesehen sein, dass die übrigen auf diesem gemeinsamen Kreisring vorgesehenen Durchlassöffnungen zumindest teilweise eine nicht identische Querschnittfläche aufweisen. All diese Maßnahmen führen zu einer strömungsoptimierten Anströmung der Messeinrichtung mit dem flüssigen Medium und damit zu einem weitergehend verbesserten Dichtungselement.

Gemäß einer nochmals weiteren vorteilhaften Ausführungsvariante kann dabei vorgesehen sein, dass der innere Dichtungsabschnitt einseitig und/oder beidseitig eine kreisringförmige Dichtwulst aufweist, die in dichtende Anlage mit der Messeinrichtung und/oder dem Einrohranschlussstück bringbar ist. Gemäß einer nochmals weiteren vorteilhaften Ausführungsvariante kann dabei vorgesehen sein, dass der äußere Dichtungsabschnitt einseitig und/oder beidseitig eine kreisringförmige Dichtwulst aufweist, die in dichtende Anlage mit dem Einrohranschlussstück und/oder der Messeinrichtung bringbar ist. Vorteilhaft wird durch die Dichtwulst eine besonders effektive fluide Abdichtung zwischen der Messeinrichtung und dem Einrohranschlussstück erzeugt, die darüber hinaus noch dazu eine gewisse Toleranz der einzelnen Bauteile ausgleicht. Vorteilhaft kann die Dichtwulst auch einteilig, insbesondere einstückig mit dem Grundkörper ausgebildet sein. Alternativ kann auch vorgesehen sein, dass die Dichtwulst an dem inneren und/oder äußeren Dichtungsabschnitt angeordnet, beispielsweise angeklebt, ist.

Gemäß einem weiteren wesentlichen Aspekt bezieht sich die Erfindung noch auf eine Anordnung, umfassend eine Messeinrichtung, insbesondere eine Ultraschallmesseinrichtung, ein Einrohranschlussstück sowie ein Dichtungselement gemäß der vorangehenden Beschreibung.

Der Ausdruck "im Wesentlichen" bzw. "etwa" bzw. "ca." bedeutet im Sinne der Erfindung Abweichungen vom jeweils exakten Wert um bis zu +/- 10%, bevorzugt um bis zu +/- 5%, und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Ferner wird der Inhalt der Ansprüche zu einem Bestandteil der Beschreibung gemacht.

Die Erfindung wird im Folgenden anhand der Figuren an Ausführungsbeispielen näher erläutert. Es zeigen:
- Fig. 1: stark vereinfacht in einer seitlichen, teilweise geschnittenen Darstellung eine Anordnung umfassend eine Messeinrichtung, insbesondere eine Ultraschallmesseinrichtung, ein Einrohranschlussstück sowie eine beispielhafte Ausführungsvariante eines erfindungsgemäßen Dichtungselementes;
- Fig. 2: stark vereinfacht in einer Perspektivdarstellung eine weitere beispielhafte Ausführungsvariante eines erfindungsgemäßen Dichtungselementes;
- Fig.3: stark vereinfacht in einer Perspektivdarstellung eine nochmals weitere beispielhafte Ausführungsvariante eines erfindungsgemäßen Dichtungselementes; und
- Fig.4: stark vereinfacht und schematisiert eine seitliche Schnittdarstellung des erfindungsgemäßen Dichtungselements.

Für gleiche oder gleich wirkende Elemente der Erfindung werden in den Figuren identische Bezugszeichen verwendet. Ferner werden der Übersichtlichkeit halber nur Bezugszeichen in den einzelnen Figuren dargestellt, die für die Beschreibung der jeweiligen Figur erforderlich sind.

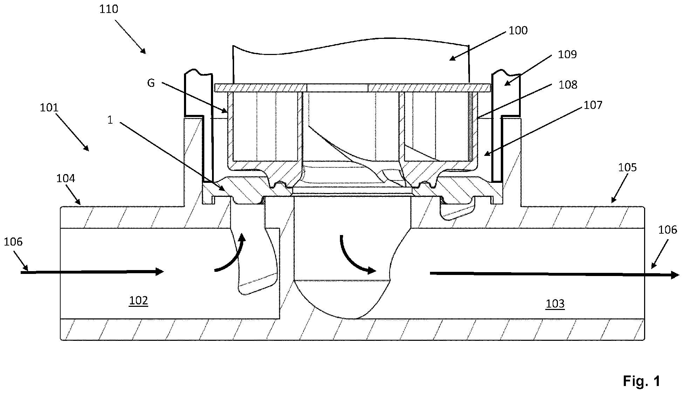

In den Figuren bezeichnet das Bezugszeichen 1 allgemein ein Dichtungselement 1 zur dichtenden Anordnung einer Messeinrichtung 100, insbesondere einer Ultraschallmesseinrichtung, an einem Einrohranschlussstück 101. Mehr im Detail zeigt dabei Figur 1 eine Anordnung 110, umfassend eine Messeinrichtung 100, insbesondere eine Ultraschallmesseinrichtung, ein Einrohranschlussstück 101 sowie ein solches erfindungsgemäßes Dichtungselement 1. Die Messeinrichtung 100 ist dabei nur grob schematisch in Figur 1 angedeutet.

Ferner zeigt Figur 1 ein bekanntes Einrohranschlussstück 101, das in einer hier nicht dargestellten Rohrleitung mit einem Einlassrohr 102 und einem Auslassrohr 103 einsetzbar ist. Das Einlassrohr 102 weist ein eingangsseitiges Anschlusselement 104 auf und das Auslassrohr 103 ein ausgangsseitiges Anschlusselement 105.

In einem Winkel von vorzugsweise 90° ist zu dem Einlassrohr 102 und dem Auslassrohr 103 eine Anschlussschnittstelle 107 für die Messeinrichtung 100 vorgesehen. Entsprechend der abgewinkelten Anordnung ist mit 106 die Strömungsrichtung eines strömenden, insbesondere flüssigen Mediums gezeigt, und zwar von einem im wesentlichen horizontalen Zulauf im Einlassrohr 102 zu einer vertikalen Folgeströmung und abstromseitig wieder zu einem horizontalen Ablauf im Auslassrohr 103.

Darüber weist die nur grob schematisch in Figur 1 dargestellte Messeinrichtung 100 ein Gehäuse G mit einem Befestigungsring 108 auf, mit dem eine fluiddichte Montage an der Anschlussschnittstelle 107 unter Einbindung des Dichtungselementes 1 an dem Einrohranschlussstück 101 ermöglicht wird. Das Gehäuse G der Messeinrichtung 100 ist in der Ausführungsvariante als gesondertes Armaturengehäuse ausgebildet, das in das von dem zu erfassenden flüssigen Medium durchflossenen Rohrleitungssystem unter Zwischenschaltung des Dichtungselements 1 fluiddicht einzubauen ist. Um einen Austritt des flüssigen Mediums aus der Anordnung 110 zu verhindern, kann das Einrohranschlussstück 101 einen Deckel 109 aufweisen. Der Deckel 109 kann dabei die Messeinrichtung 100 vorzugsweise vollständig umschließen. Dabei ist das Dichtungselement 1 zur dichtenden Anordnung der Messeinrichtung 100 an dem Einrohranschlussstück 101 vorgesehen bzw. ausgebildet. Bei dem Einrohranschlussstück 101 kann es sich um ein solches mit einer Anschlussschnittstelle 107, bzw. einem dafür angepassten Befestigungsring 108, des Typs IST, M60, PCC, Y01 nach DIN EN ISO 4064-4 oder dazu vergleichbare handeln.

Besonders vorteilhaft handelt es sich bei der Messeinrichtung 100 um eine solche zur schallbasierten Erfassung der Durchflussmenge eines flüssigen Mediums. Die dabei benötigten und in den Figuren nicht nähergehend dargestellten Schallwandler können in unterschiedlicher Ausgestaltung vorliegen. Bei einer bevorzugten Ausführungsform sind zwei Schallwandler vorhanden, die jeweils sowohl als Schallsender als auch als Schallempfänger ausgebildet sind, so dass beispielsweise impulsförmige Schallsignale in Durchflussrichtung und entgegen der Durchflussrichtung des Mediums in die Messstrecke eingespeist werden können, und die Ermittlung der Durchflussmenge des Mediums anhand des Laufzeitdifferenzprinzips erfolgen kann. Die beiden Schallwandler können also insbesondere zwei Schallsignale erzeugen, die die Messstrecke im Wesentlichen in entgegengesetzter Richtung durchlaufen.

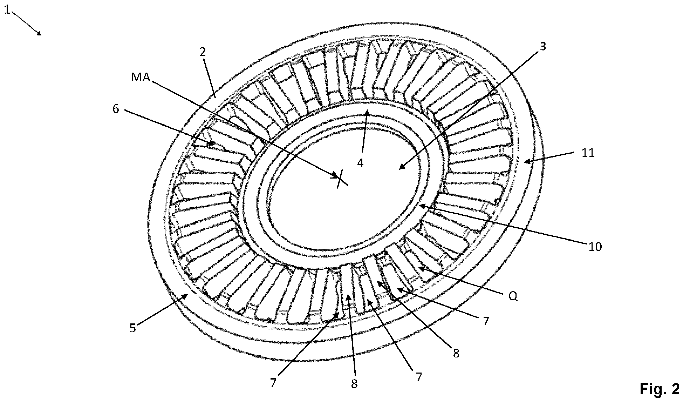

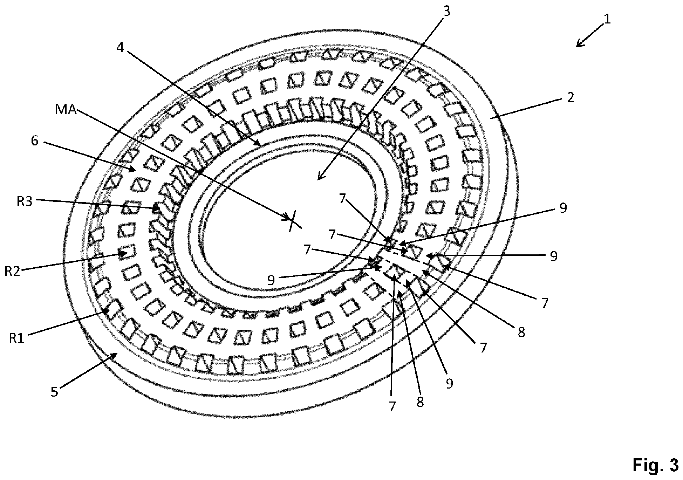

Wie aus den Figuren 2 und 3 deutlicher ersichtlich, weist das Dichtungselement 1 wenigstens einen ring- und/oder scheibenförmigen Grundkörper 2 aus einem elastischen Dichtungsmaterial mit einer zentrischen Durchflussöffnung 3 für ein flüssiges Medium auf.

Vorzugsweise kann das elastische Dichtungsmaterial des Grundkörpers 2 zumindest anteilig Kautschuk, insbesondere einen Synthesekautschuk, enthalten. Mithin kann der Grundkörper 2 auch vorzugsweise vollständig aus Ethylen-Propylen-Dien-Kautschuk (EPDM) oder aus Acrylnitril-Butadien-Kautschuk (NBR) oder aus Fluorelastomere oder aus Silikon hergestellt sein.

Mehr im Detail weist der Grundkörper 2 einen inneren Dichtungsabschnitt 4 und einen äußeren Dichtungsabschnitt 5 sowie einen dazwischen aufgenommenen, bzw. angeordneten Strömungssiebabschnitt 6 auf, die die Durchflussöffnung 3 jeweils konzentrisch umgeben. In der gezeigten Ausführungsvariante beispielsweise der Figur 1 sind der äußere und der innere Dichtungsabschnitt 4, 5 sowie der Strömungssiebabschnitt 6 jeweils im Wesentlichen ringförmig ausbildet. Hierdurch kann ein um die Mittelachse MA des Dichtungselements 1 orientierter konzentrischer Aufbau der inneren und äußeren Dichtungsabschnitte 4, 5 sowie des dazwischenliegend aufgenommenen Strömungssiebabschnittes 6 geschaffen werden. Besonders vorteilhaft ist der Grundkörper 2 einteilig, insbesondere einstückig, ausgebildet.

Für die dichtende Anordnung der Messeinrichtung 100 an dem Einrohranschlussstück 101 sind dabei der äußere Dichtungsabschnitt 5 und der innere Dichtungsabschnitt 4 des Dichtungselementes 1 zur Abdichtung zwischen dem Einrohranschlussstück 101 und der Messeinrichtung 100 ausgebildet.

Mithin weist der Strömungssiebabschnitt 6 des Dichtungselementes 1 eine Vielzahl an Durchlassöffnungen 7 zur Durchführung des flüssigen Mediums auf, die zur strömungsoptimierten Anströmung der Messeinrichtung 100 mit dem flüssigen Medium ausgebildet sind.

Die Durchlassöffnungen 7 des Strömungssiebabschnittes 6 können dabei einen kreisförmigen oder einen quadratischen oder einen rechteckförmigen oder einen dreieckförmigen oder einen stegförmigen Querschnitt aufweisen. Wie insbesondere aus Figur 2 ersichtlich weisen die Durchlassöffnungen 7 des Strömungssiebabschnittes 6 besonders vorteilhaft einen im Wesentlichen trapezförmigen Querschnitt Q mit abgerundeten Eckbereichen auf.

Wie ebenfalls aus der Figur 2 ersichtlich weist der Strömungssiebabschnitt 6 in der Ausführungsvariante dieser Darstellung mehrere Strebenabschnitte 8 auf, die sich vom inneren Dichtungsabschnitt 4 radial und speichenförmig zum äußeren Dichtungsabschnitt 5 erstrecken. Die speichenförmigen Strebenabschnitte 8 verbinden also gewissermaßen den inneren Dichtungsabschnitt 4 mit dem äußeren Dichtungsabschnitt 5. Zwischen zwei benachbarten Strebenabschnitten 8 des Strömungssiebabschnittes 6 ist dabei in der Ausführungsvariante der Figur 2 jeweils eine Durchlassöffnung 7 angeordnet bzw. ausbildet, während in der Ausführungsvariante der Figur 3 zwischen zwei benachbarten Strebenabschnitten 8 mehrere, nämlich jeweils drei Durchlassöffnungen 7 vorgesehen sind.

Vorteilhaft können die Durchlassöffnungen 7 als Strömungsgleichrichterkanäle ausgebildet sein, die eine homogene, insbesondere laminare Strömung des die Durchlassöffnungen 7 durchstörmenden Medium erzeugen. Alternativ oder kumulativ kann auch vorgesehen sein, dass die mehreren Durchlassöffnungen 7 zumindest teilweise in gleichmäßigen oder näherungsweise gleichmäßigen Winkelabständen um die zentrische Durchflussöffnung 3 herum angeordnet sind.

Wie wiederum aus der Figur 3 ersichtlich, kann dabei vorgesehen sein, dass die Strebenabschnitte 8 durch zumindest einen koaxial zur zentrischen Durchflussöffnung 3 vorgesehenen sowie ringförmig ausgebildeten Versteifungsabschnitt 9 derart miteinander verbunden sind, dass sich auf unterschiedlichen Radien R1, R2, R3 zu einer Mittelachse MA des Dichtungselementes 1 jeweils kreisringförmig mehrere Durchlassöffnungen 7 einstellen.

Das Ausführungsbeispiel der Figur 3 zeigt dabei drei unterschiedliche Radien, nämlich einen ersten, innen liegenden Radius R1, einen dritten, außen liegenden Radius R3, sowie einen zwischen dem ersten und dem dritten Radius R1, 3 angeordneten zweiten Radius 2. Auf jedem der drei Radien liegen dabei jeweils kreisförmig angeordnete Durchlassöffnungen 7.

Mehr im Detail liegen dabei auf dem dritten Radius R3 kreisförmig angeordnete Durchlassöffnungen 7, auf dem zweiten Radius R2 kreisförmig angeordnete Durchlassöffnungen 7, sowie auf dem ersten Radius R1 kreisförmig angeordnete Durchlassöffnungen 7. Damit zeigt die Figur 2 eine Ausführungsvariante für zwei sich koaxial zur zentrischen Durchflussöffnung 3 sowie ringförmig dazu ausgebildeten Versteifungsabschnitten 9. Zum einfacheren Verständnis sind dabei in der Figur 3 strichliert die sich damit einstellenden Strebenabschnitte 8 hervorgehoben.

Gemäß der Ausführungsvariante der Figur 3 sind dabei jeweils auf einem gemeinsamen Radius, also auf dem ersten Radius R1, oder auf dem zweiten Radius R2 oder auf dem dritten Radius R3 zu der Mittelachse MA angeordnete Durchlassöffnungen 7 des Strömungssiebabschnittes 6 zumindest teilweise identisch zueinander ausgebildet sind. Mehr im Detail sind die jeweils auf einem gemeinsamen Radius R1, oder R2 oder R3, zur Mittelachse MA angeordneten Durchlassöffnungen 7 kreisringförmig um die Mittelachse MA vorgesehen.

Schließlich kann auch vorgesehen sein, dass zumindest zwei auf einem gemeinsamen Kreisring angeordnete Durchlassöffnungen 7 eine identische Querschnittfläche Q aufweisen. Die Ausführungsvariante der Figur 3 zeigt dabei ein Dichtungselement 1, bei dem sämtliche auf einem gemeinsamen Kreisring vorgesehene Durchlassöffnungen 7 eine jeweils identisch zueinander ausgebildete Querschnittsfläche Q aufweisen.

Auch kann vorgesehen sein, dass der innere Dichtungsabschnitt 4 einseitig und/oder beidseitig eine kreisringförmige Dichtwulst 10 aufweist, die in dichtende Anlage mit der Messeinrichtung 100 und/oder dem Einrohranschlussstück 101 bringbar ist. Mithin kann auch der äußere Dichtungsabschnitt 5 einseitig und/oder beidseitig eine kreisringförmige Dichtwulst 11 aufweist, die in dichtende Anlage mit dem Einrohranschlussstück 101 und/oder der Messeinrichtung 100 bringbar ist.

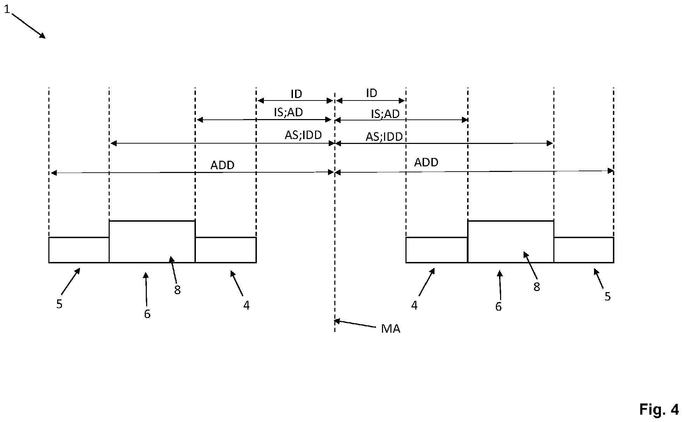

Die Figur 4 zeigt dabei eine stark schematisierte seitliche Schnittdarstellung des Dichtungselements 1, anhand der die einzelnen Durchmesser des inneren und äußeren Dichtungsabschnittes 4, 5 sowie der Strebenabschnitte 8 des Strömungssiebabschnittes 6 dargestellt sind. Dabei können sich die Strebenabschnitte 8 des Strömungssiebabschnittes 6 von einem Innendurchmesser IS zwischen 30mm und 35mm, bevorzugt zwischen 32mm und 34mm, höchst bevorzugt von 33mm, auf einen Außendurchmesser AS zwischen 42mm und 50mm, bevorzugt zwischen 44mm und 48mm, höchst bevorzugt von 46mm, bezogen auf eine Mittelachse MA des Dichtungselementes 1 erstrecken. Beispielsweise weist ein Strebenabschnitt 8 mit einem Innendurchmesser IS von 33mm und einem Außendurchmesser IS von 46mm eine Länge von 13mm auf.

Ferner kann sich der innere Dichtungsabschnitt 4 von einem Innendurchmesser ID zwischen 20mm und 24mm, bevorzugt zwischen 21mm und 23mm, höchst bevorzugt von 22mm, auf einen Außendurchmesser AD zwischen 32mm und 34mm, höchst bevorzugt von 33mm, bezogen auf eine Mittelachse MA des Dichtungselementes 1erweitern. Beispielsweise weist also ein innerer Dichtungsabschnitt 4 mit einem Innendurchmesser ID von 22mm und einem Außendurchmesser AD von 33mm eine Flächenbreite von 11mm auf.

Schließlich kann sich der äußere Dichtungsabschnitt 5 von einem Innendurchmesser IDD zwischen 42mm und 50mm, bevorzugt zwischen 44mm und 48mm, höchst bevorzugt von 46mm, auf einen Außendurchmesser ADD zwischen 56mm und 58mm, höchst bevorzugt von 57mm, bezogen auf eine Mittelachse MA des Dichtungselementes 1 erweitern. Beispielsweise weist also ein äußerer Dichtungsabschnitt mit einem Innendurchmesser IDD von 46mm und einem Außendurchmesser ADD von 57mm eine Flächenbreite von 11mm auf.

Besonders vorteilhaft weist das Dichtungselement 1 für die Strebenabschnitte 8 einen Innendurchmesser IS von 33mm und einen Außendurchmesser AS von 46mm, sowie für den inneren Dichtungsabschnitt 4 einen Innendurchmesser ID von 22mm und einen Außendurchmesser AD von 33mm und für den äußeren Dichtungsabschnitt 5 einen Innendurchmesser ISS von 46mm und einen Außendurchmesser ASS von 57mm auf.

Die Erfindung ist nicht auf die dargestellten Ausführungsbeispiele beschränkt, sondern kann innerhalb des Schutzbereichs der nachfolgenden Ansprüche beliebige variiert werden.

### Bezugszeichenliste

- 1: Dichtungselement
- 2: Grundkörper
- 3: Durchflussöffnung
- 4: innerer Dichtungsabschnitt
- 5: äußere Dichtungsabschnitt
- 6: Strömungssiebabschnitt
- 7: Durchlassöffnung
- 8: Strebenabschnitt
- 9: Versteifungsabschnitt

- 100: Messeinrichtung
- 101: Einrohranschlussstück
- 102: Einlassrohr
- 103: Auslassrohr
- 104: eingangsseitiges Anschlusselement
- 105: ausgangsseitiges Anschlusselement
- 106: Strömungsrichtung
- 107: Anschlussschnittstelle
- 108: Befestigungsring
- 109: Deckel

- 110: Anordnung

- G: Gehäuse
- Q: Querschnitt
- MA: Mittelachse
- R1, R2, R3: Radius
- IS: Innendurchmesser Strebenabschnitt
- ID: Innendurchmesser innerer Dichtungsabschnitt
- IDD: Innendurchmesser äußerer Dichtungsabschnitt
- AS: Außendurchmesser Strebenabschnitt
- AD: Außendurchmesser innerer Dichtungsabschnitt
- ADD: Außendurchmesser äußerer Dichtungsabschnitt

## Patentansprüche

1. Dichtungselement (1) zur dichtenden Anordnung einer Messeinrichtung (100), insbesondere einer Ultraschallmesseinrichtung, an einem Einrohranschlussstück (101),
wenigstens aufweisend einen ring- und/oder scheibenförmigen Grundkörper (2) aus einem elastischen Dichtungsmaterial mit einer zentrischen Durchflussöffnung (3) für ein flüssiges Medium,
wobei der Grundkörper (2) einen äußeren und inneren Dichtungsabschnitt (4, 5) sowie einen dazwischen aufgenommenen Strömungssiebabschnitt (6) aufweist, die die Durchflussöffnung (3) jeweils konzentrisch umgeben,
wobei der äußere Dichtungsabschnitt (5) und der innere Dichtungsabschnitt (4) zur Abdichtung zwischen dem Einrohranschlussstück (101) und der Messeinrichtung (100) ausgebildet sind,
und wobei der Strömungssiebabschnitt (6) eine Vielzahl an Durchlassöffnungen (7) zur Durchführung des Mediums aufweist, die zur strömungsoptimierten Anströmung der Messeinrichtung (100) mit dem Medium ausgebildet sind.

2. Dichtungselement nach Anspruch 1, wobei der Grundkörper (2) einteilig, insbesondere einstückig ausgebildet ist.

3. Dichtungselement nach Anspruch 1 oder 2, wobei das elastische Dichtungsmaterial des Grundkörpers (2) zumindest anteilig Kautschuk, insbesondere einen Synthesekautschuk, enthält.

4. Dichtungselement nach Anspruch 3, wobei der Grundkörper (2) vorzugsweise vollständig aus Ethylen-Propylen-Dien-Kautschuk (EPDM) oder aus Acrylnitril-Butadien-Kautschuk (NBR) oder aus Fluorelastomere oder aus Silikon hergestellt ist.

5. Dichtungselement nach einem der vorhergehenden Ansprüchen, wobei der äußere und der innere Dichtungsabschnitt (4, 5) sowie der Strömungssiebabschnitt (6) jeweils ringförmig ausbildet sind.

6. Dichtungselement nach einem der vorhergehenden Ansprüchen, wobei die Durchlassöffnungen (7) des Strömungssiebabschnittes (6) einen kreisförmigen, quadratischen, rechteckförmigen, dreieckförmigen oder stegförmigen Querschnitt, vorzugsweise einen im Wesentlichen trapezförmigen Querschnitt (Q) mit abgerundeten Eckbereichen, aufweisen.

7. Dichtungselement nach einem der vorhergehenden Ansprüchen, wobei der Strömungssiebabschnitt (6) mehrere Strebenabschnitte (8) aufweist, die sich vom inneren Dichtungsabschnitt (4) radial und speichenförmig zum äußeren Dichtungsabschnitt (5) erstrecken.

8. Dichtungselement nach Anspruch 7, wobei jeweils eine oder mehrere Durchlassöffnungen (7) zwischen zwei benachbarten Strebenabschnitten (8) des Strömungssiebabschnittes (6) angeordnet ist/sind.

9. Dichtungselement nach Anspruch 7 oder 8, wobei die Strebenabschnitte (8) durch zumindest einen koaxial zur zentrischen Durchflussöffnung (3) vorgesehenen sowie ringförmig ausgebildeten Versteifungsabschnitt (9) derart miteinander verbunden sind, dass sich auf unterschiedlichen Radien (R1, R2, R3) zu einer Mittelachse (MA) des Dichtungselementes (1) jeweils kreisringförmig mehrere Durchlassöffnungen (7) einstellen.

10. Dichtungselement nach einem der vorhergehenden Ansprüche, wobei die mehreren Durchlassöffnungen (7) als Strömungsgleichrichterkanäle ausgebildet sind.

11. Dichtungselement nach einem der vorhergehenden Ansprüche, wobei die mehreren Durchlassöffnungen (7) zumindest teilweise in gleichmäßigen oder näherungsweise gleichmäßigen Winkelabständen um die zentrische Durchflussöffnung (3) herum angeordnet sind.

12. Dichtungselement nach einem der vorhergehenden Ansprüche, wobei jeweils auf einem gemeinsamen Radius (R1 oder R2 oder R3) zu der Mittelachse (MA) angeordnete Durchlassöffnungen (7) des Strömungssiebabschnittes (6) zumindest teilweise identisch zueinander ausgebildet sind.

13. Dichtungselement nach einem der vorhergehenden Ansprüche, wobei die jeweils mit einem gemeinsamen Radius (R1 oder R2 oder R3) zur Mittelachse (MA) angeordneten Durchlassöffnungen (7) kreisringförmig um die Mittelachse (MA) vorgesehen sind.

14. Dichtungselement nach Anspruch 13, wobei zumindest zwei auf einem gemeinsamen Kreisring vorgesehene Durchlassöffnungen (7) eine identische Querschnittfläche (Q) aufweisen.

15. Dichtungselement nach einem der vorangehenden Ansprüche, wobei der innere Dichtungsabschnitt (4) einseitig und/oder beidseitig eine kreisringförmige Dichtwulst (10) aufweist, die in dichtende Anlage mit der Messeinrichtung (100) und/oder dem Einrohranschlussstück (101) bringbar ist.

16. Dichtungselement nach einem der vorangehenden Ansprüche, wobei der äußere Dichtungsabschnitt (5) einseitig und/oder beidseitig eine kreisringförmige Dichtwulst (11) aufweist, die in dichtende Anlage mit dem Einrohranschlussstück (101) und/oder der Messeinrichtung (100) bringbar ist.

17. Anordnung (110), umfassend eine Messeinrichtung (100), insbesondere eine Ultraschallmesseinrichtung, ein Einrohranschlussstück (101) sowie ein Dichtungselement (1) gemäß einem der vorangehenden Ansprüche.

## Claims

1. Sealing element (1) for the sealing arrangement of a measuring device (100), in particular an ultrasonic measuring device, on a single-pipe connection piece (101),
having at least a ring-shaped and/or disc-shaped base body (2) made of an elastic sealing material with a central flow-through opening (3) for a liquid medium,
wherein the base body (2) has an outer and an inner sealing section (4, 5) as well as a flow screen section (6) received therebetween, which respectively concentrically surround the flow-through opening (3),
wherein the outer sealing section (5) and the inner sealing section (4) are designed for sealing between the single-pipe connection piece (101) and the measuring device (100),
and wherein the flow screen section (6) has a plurality of passage openings (7) for the passage of the medium, which are designed for flow-optimised impingement of the medium on the measuring device (100).

2. Sealing element according to claim 1, wherein the base body (2) is designed in one part, in particular in one piece.

3. Sealing element according to claim 1 or 2, wherein the elastic sealing material of the base body (2) contains rubber at least in part, in particular a synthetic rubber.

4. Sealing element according to claim 3, wherein the base body (2) is preferably produced entirely from ethylene propylene diene rubber (EPDM) or from acrylonitrile butadiene rubber (NBR) or from fluoroelastomers or from silicone.

5. Sealing element according to any one of the preceding claims, wherein the outer and the inner sealing section (4, 5) as well as the flow screen section (6) are each designed in a ring-shaped manner.

6. Sealing element according to any one of the preceding claims, wherein the passage openings (7) of the flow screen section (6) have a circular, square, rectangular, triangular or web-shaped cross section, preferably a substantially trapezoidal cross section (Q) with rounded corner regions.

7. Sealing element according to any one of the preceding claims, wherein the flow screen section (6) has a plurality of strut sections (8) which extend radially and in a spoke-like manner from the inner sealing section (4) to the outer sealing section (5).

8. Sealing element according to claim 7, wherein in each case one or more passage openings (7) is/are arranged between two adjacent strut sections (8) of the flow screen section (6).

9. Sealing element according to claim 7 or 8, wherein the strut sections (8) are connected to one another by at least one stiffening section (9) which is provided coaxially to the central flow-through opening (3) and is designed in a ring-shaped manner, in such a way that a plurality of passage openings (7) are formed in each case in a circular ring-shaped manner on different radii (R1, R2, R3) relative to a centre axis (MA) of the sealing element (1).

10. Sealing element according to any one of the preceding claims, wherein the plurality of passage openings (7) are designed as flow straightener channels.

11. Sealing element according to any one of the preceding claims, wherein the plurality of passage openings (7) are arranged at least partially at regular or approximately regular angular intervals around the central flow-through opening (3).

12. Sealing element according to any one of the preceding claims, wherein passage openings (7) of the flow screen section (6), which are arranged in each case on a common radius (R1 or R2 or R3) relative to the centre axis (MA), are at least partially designed identically to one another.

13. Sealing element according to any one of the preceding claims, wherein the passage openings (7), which are arranged in each case with a common radius (R1 or R2 or R3) relative to the centre axis (MA), are provided in a circular ring-shaped manner around the centre axis (MA).

14. Sealing element according to claim 13, wherein at least two passage openings (7) provided on a common circular ring have an identical cross-sectional area (Q).

15. Sealing element according to any one of the preceding claims, wherein the inner sealing section (4) has, on one side and/or on both sides, a circular ring-shaped sealing bead (10) which can be brought into sealing contact with the measuring device (100) and/or the single-pipe connection piece (101).

16. Sealing element according to any one of the preceding claims, wherein the outer sealing section (5) has, on one side and/or on both sides, a circular ring-shaped sealing bead (11) which can be brought into sealing contact with the single-pipe connection piece (101) and/or the measuring device (100).

17. Arrangement (110), comprising a measuring device (100), in particular an ultrasonic measuring device, a single-pipe connection piece (101) and a sealing element (1) according to any one of the preceding claims.

## Revendications

1. Élément d'étanchéité (1) pour un agencement d'étanchéité d'un appareil de mesure (100), en particulier d'un appareil de mesure à ultrasons, au niveau d'une pièce de raccord monotube (101),
présentant au moins un corps de base (2) en forme d'anneau et/ou de disque en un matériau d'étanchéité élastique avec une ouverture de débit centrale (3) pour un milieu liquide,
dans lequel le corps de base (2) présente une section d'étanchéité extérieure et intérieure (4, 5) ainsi qu'une section de tamis d'écoulement (6) logée entre celles-ci, qui entourent respectivement de manière concentrique l'ouverture de débit (3),
dans lequel la section d'étanchéité extérieure (5) et la section d'étanchéité intérieure (4) sont conçues pour assurer l'étanchéité entre la pièce de raccord monotube (101) et l'appareil de mesure (100),
et dans lequel la section de tamis d'écoulement (6) présente une multitude d'ouvertures de passage (7) destinées au passage du milieu, ouvertures qui sont conçues pour l'écoulement optimisé du milieu avec l'appareil de mesure (100).

2. Élément d'étanchéité selon la revendication 1, dans lequel le corps de base (2) est conçu d'une seule pièce, en particulier d'un seul tenant.

3. Élément d'étanchéité selon la revendication 1 ou 2, dans lequel le matériau d'étanchéité élastique du corps de base (2) contient au moins proportionnellement du caoutchouc, en particulier un caoutchouc synthétique.

4. Élément d'étanchéité selon la revendication 3, dans lequel le corps de base (2) est de préférence entièrement fabriqué en caoutchouc éthylène-propylène-diène (EPDM) ou en caoutchouc acrylonitrile-butadiène (NBR) ou en élastomères fluorés ou en silicone.

5. Élément d'étanchéité selon l'une quelconque des revendications précédentes, dans lequel les sections d'étanchéité extérieure et intérieure (4, 5) ainsi que la section de tamis d'écoulement (6) sont respectivement de forme annulaire.

6. Élément d'étanchéité selon l'une quelconque des revendications précédentes, dans lequel les ouvertures de passage (7) de la section de tamis d'écoulement (6) présentent une section transversale en forme de cercle, de carré, de rectangle, de triangle ou de nervure, de préférence une section transversale (Q) sensiblement trapézoïdale avec des zones d'angle arrondies.

7. Élément d'étanchéité selon l'une quelconque des revendications précédentes, dans lequel la section de tamis d'écoulement (6) présente plusieurs sections d'entretoise (8) qui s'étendent radialement depuis la section d'étanchéité intérieure (4) et en forme de rayons vers la section d'étanchéité extérieure (5).

8. Élément d'étanchéité selon la revendication 7, dans lequel respectivement une ou plusieurs ouvertures de passage (7) est/sont disposée(s) entre deux sections d'entretoise voisines (8) de la section de tamis d'écoulement (6).

9. Élément d'étanchéité selon la revendication 7 ou 8, dans lequel les sections d'entretoise (8) sont connectées entre elles par au moins une section de renfort (9) prévue coaxialement à l'ouverture de débit centrale (3) et conçue en forme d'anneau de sorte que plusieurs ouvertures de passage (7) sont formées respectivement en forme d'anneaux circulaires sur différents rayons (R1, R2, R3) par rapport à un axe central (MA) de l'élément d'étanchéité (1).

10. Élément d'étanchéité selon l'une quelconque des revendications précédentes, dans lequel les plusieurs ouvertures de passage (7) sont conçues en tant que canaux de redressement d'écoulement.

11. Élément d'étanchéité selon l'une quelconque des revendications précédentes, dans lequel les plusieurs ouvertures de passage (7) sont disposées au moins partiellement à des intervalles angulaires réguliers ou approximativement réguliers autour de l'ouverture de débit centrale (3).

12. Élément d'étanchéité selon l'une quelconque des revendications précédentes, dans lequel des ouvertures de passage (7) de la section de tamis d'écoulement (6) disposées respectivement selon un rayon commun (R1 ou R2 ou R3) par rapport à l'axe central (MA) sont au moins partiellement identiques les unes aux autres.

13. Élément d'étanchéité selon l'une quelconque des revendications précédentes, dans lequel les ouvertures de passage (7) disposées respectivement selon un rayon commun (R1, R2 ou R3) par rapport à l'axe central (MA) sont prévues en forme d'anneau circulaire autour de l'axe central (MA).

14. Élément d'étanchéité selon la revendication 13, dans lequel au moins deux ouvertures de passage (7) prévues sur un anneau circulaire commun présentent une surface de section transversale (Q) identique.

15. Élément d'étanchéité selon l'une quelconque des revendications précédentes, dans lequel la section d'étanchéité intérieure (4) présente, d'un côté et/ou des deux côtés, un bourrelet d'étanchéité en forme d'anneau circulaire (10), qui peut être amené en contact étanche avec l'appareil de mesure (100) et/ou la pièce de raccord monotube (101).

16. Élément d'étanchéité selon l'une quelconque des revendications précédentes, dans lequel la section d'étanchéité extérieure (5) présente, d'un côté et/ou des deux côtés, un bourrelet d'étanchéité annulaire (11), qui peut être amené en contact étanche avec la pièce de raccord monotube (101) et/ou l'appareil de mesure (100).

17. Agencement (110) comprenant un appareil de mesure (100), en particulier un appareil de mesure à ultrasons, une pièce de raccord monotube (101) ainsi qu'un élément d'étanchéité (1) selon l'une quelconque des revendications précédentes.
